# EUROPEAN PATENT APPLICATION

(11) **EP 3 118 453 A1**
(43) Date of publication of application: **18.01.2017**
(21) Application number: 15758970.6
(22) Date of filing: 04.03.2015
(51) Int. Cl.: F03D 13/20, E04H 12/34, E04H 12/12

(54) **WIND TOWERS CONSTRUCTION SYSTEM**

(30) Priority: 07.03.2014 ES 201430312
(71) Applicant: Inneo Torres, S.L., 28020 Madrid (ES)
(72) Inventor: JIMENO CHUECA, Jose Emilio, E-28001 Madrid (ES); LLEYDA DIONIS, Jose Luis, E-28003 Madrid (ES); SERNA GARCÍA-CONDE, José Salustiano, E-08005 Barcelona (ES)
(86) International application number: PCT/ES2015/070156
(87) International publication number: WO 2015/132438

(57) **Abstract**

The invention relates to a system having multiple improvements compared to conventional systems for building wind towers made of section of reinforced concrete, in order to significantly reduce building costs. Such improvements include: obtaining a profile extruding from truncated cone sections that conform as much as possible to the ideal curved profile of the tower; using prestretched cables, which are factory-tensioned before installing the rebar, and tendons that pass through the arch stones, making it possible to link various arch stones with one another; and reducing the thickness of the arch stones; and arranging the rebar in only one layer, as well as other improvements described through the present invention.

## Description

### OBJECT OF THE INVENTION

The present invention relates to a wind towers construction system, of the type formed from arch stones obtained in concrete.

The object of the invention is to provide a simple structuring of the elements which participate in the tower, so that greater simplicity is achieved in execution of the moulds and of the geometry of the manufactured arch stones, reducing the control times and their cost, thus achieving greater accuracy in manufacturing these elements.

An object of the invention is also to reduce the general thickness of the arch stones, and consequently the volume of concrete necessary to obtain them, with the consequent saving in costs and greater ease of assembly due to their lower weight.

An object of the invention is also to reduce the need for labour of engineers and the times to position said rebar.

These and other advantages derived from the new structuring shall be seen throughout the present specification.

### BACKGROUND OF THE INVENTION

In the field of practical application of the invention, that of the wind towers obtained from arch stones manufactured in concrete, the actual tower is obtained from a plurality of modules which are vertically disposed, obtained from the joining of two or more arch stones, so that the tower profile is not straight but has radii of curvature in the order of 1000 to 5000m of radius.

This means obtaining the moulds of the arch stones which participate in the tower is very complicated, which leads to exhaustive control and extremely high manufacturing costs.

Although towers are also known with completely straight profile, with a certain inclination, the reality is that these types of towers are only suitable for small heights, since, over a certain height, the width of the tower at a lower level must be much greater than the width thereof at higher levels, in a non-linear manner.

To these problems, it is necessary to add the problem relating to the structural complexity of this type of construction systems regarding the joints been modules and arch stones, the great thicknesses used and the use of double layers of rebar, and the tensioning of the different parts, all which translates into significant costs, which it would be desirable to minimize.

### DESCRIPTION OF THE INVENTION

The wind towers construction system proposed by the invention resolves in a fully satisfactory manner the aforementioned problems, thanks to a simple but highly efficient solution.

More specifically, it has been provided that the vertical modules into which the tower is divided, obtained by means of the use of two or more arch stones, are obtained from truncated cone sections of straight directrix.

Said modules will have a straight profile, although their inclination may be different, unlike what happens in towers with straight profile, so that the final profile obtained, although not curved, adapts to the "ideal" curve based on different sections of different inclinations, so that, given that the ideal radii of curvature are in the order of 1000 to 5000 metres, the tower obtained has practically no visual or structural repercussions with respect to the "ideal" profile, maintaining the frame quantities.

However, this structural simplification drastically reduces the manufacturing costs as it requires much simpler moulds, reducing the control times and costs, of greater accuracy in manufacturing the arch stones.

In accordance with another of the characteristics of the invention, it has been provided that, in replacement of the classic fixing means of the horizontal joints between arch stones, wherein there is the participation of pre-tensioned bolts and passive bars, the arch stones are vertically interlinked based on cable tendons, which run vertically through the interior of the arch stones, and are made to pass through respective orifices made in respective prominent elements of the edges defined in the joint, so that a same tendon of an arch stone is linked by one of its ends with the arch stone immediately above it, and by the other end with the arch stone immediately below it.

These elements collaborate in withstanding the operating stresses in service of the tower assembly, so that there are no adherent elements, but instead clad with a coating and are tensioned in the wind farm after assembly of the tower sections.

A similar structuring has been provided for fixing the tower to the foundations so that in replacement of the classic passive bars and pre-tensioned bolts protruding from the base shoe which are anchored to the lower end of the arch stone in the tower base, it has been provided that from the base shoe emerge cable tendons which are made to pass through vertical pipes at the lower end of the arch stones of the first section until connecting with the tendons of these arch stones, being tensioned above the horizontal joint between the first and second section.

In this way, the tendons have a sufficiently large length so that the elongation, if tensioned, is sufficiently large so that the losses occurred in the fastening of the chocks when the jacks are removed, do not excessively decrease the elongation of the tensioning and, therefore, the tension of the tendon.

In accordance with another of the characteristics of the invention, it has been provided to reduce the general thickness of the arch stones, thus reducing the weight, which facilitates the assembly of the sections in the wind farm, especially in towers of great height.

Therefore, it has been provided that the rebar is disposed in a single layer, instead of in the two conventional layers.

In parallel, the use of pre-tensioned frames has been provided as part of the active frame, so that in addition to the tendons that run through the interior of the arch stones, adherent cords are disposed that are factory-tensioned before placing the general rebar of the arch stone in the mould, before the concreting thereof.

These cords collaborate with the general frame of the arch stone to withstand the operating stresses in service of the tower, additionally having two functions; on the one hand, withstanding the stresses of the arch stone in the handling operations thereof, demoulding, stockpiling, transport and pre-assembly, and, in parallel, serving as support and fixing of the rebar grilles on most of the arch stone surface, eliminating part of the separation elements of the rebar and maintaining the foreseen concrete coatings.

The special configuration of the disposal of the rebar in a single layer, together with the fixing by means of a layer of pre-tensioned frames, it is possible to reduce the need for the labour of engineers and rebar placement times.

In accordance with another of the characteristics of the invention, the inclusion has been provided of lifting and handling fastenings in the reinforced areas of the base and the head of the arch stone, so that, on reducing the general thickness of the arch stone, it is not necessary to locally supplement the thickness to place the corresponding fastenings.

In this way, the extra thickness at the ends makes it possible to position the handling fastenings with clearance, even decreasing their number from 4 to 2 units at each end.

Finally, it is necessary to highlight the fact that, optionally, the boxes defined in the horizontal joints for housing the active and passive ends for tensioning the tendons may be eliminated, modifying the geometry of said ends of the arch stones, which involves a simplification in the manufacturing thereof, facilitating the tensioning works in the wind farm.

### DESCRIPTION OF THE DRAWINGS

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented.
- Figure 1.-: Shows a profile view of a wind tower, the scale of which has been vertically deformed to be able to see with greater ease the theoretical profile of the tower and the real profile thereof.
- Figure 2. -: Shows a diagrammatic perspective view of a section formed by several arch stones.
- Figure 3.-: Shows a detail in vertical section of the joining profile between arch stones, corresponding to a first variant of embodiment wherein boxes are defined for housing the active and passive ends for tightening the tendons.
- Figure 4.-: Shows a view similar to that of figure 3, but corresponding to a variant of embodiment wherein the boxes are eliminated to house the active and passive ends for tensioning the tendons.
- Figures 5 and 6. -: Show different details in sequential sections of the fixing means of the lower arch stone to the base shoe.
- Figure 7. -: Shows, finally, a sectional detail in accordance with a horizontal cut plane of an arch stone, in order to be able to view the frame which participates therein.

### PREFERRED EMBODIMENT OF THE INVENTION

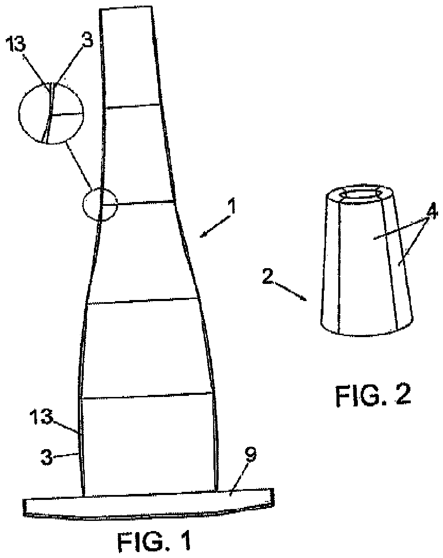

As can be seen in the aforementioned figures, and in particular in figures 1 and 2, the tower (1) of the invention is formed from a series of vertical sections (2) obtained in turn from two or more arch stones (4), so that, against the ideal theoretical curved profile (3), which due to calculations the tower should have, it has been provided that said profile is obtained from straight segments (13), for which reason the vertical sections which participate in the tower have a truncated cone configuration with straight directrix.

Consequently, the different sections of the tower will have a straight profile, although their inclination shall be different, unlike what happens with conventional straight profile towers.

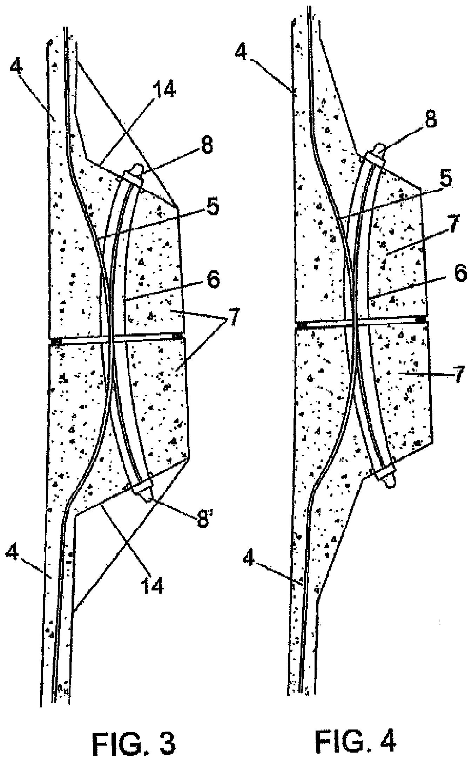

As can be observed in figures 3 and 4, and in accordance with another of the characteristics of the invention, it has been provided that in replacement of the classic fixing means in the horizontal joints between arch stones, the arch stones are vertically interlinked with cable tendons (5), which run vertically through the interior of the arch stones emerging at both ends in perfectly vertical position to allow in the assembly process, the introduction through respective orifices (6) made in respective prominent elements (7) of the edges defined in the horizontal joint of the arch stones (4), so that a same tendon (5) of an arch stone is linked by one of its ends with the arch stone immediately above it, and at the other end with the arch stone immediately below it, by means of the corresponding active (8) and passive (8') fastenings.

The tendons (5), as previously mentioned are clad with a coating and are tensioned in the wind farm after assembly of the tower sections.

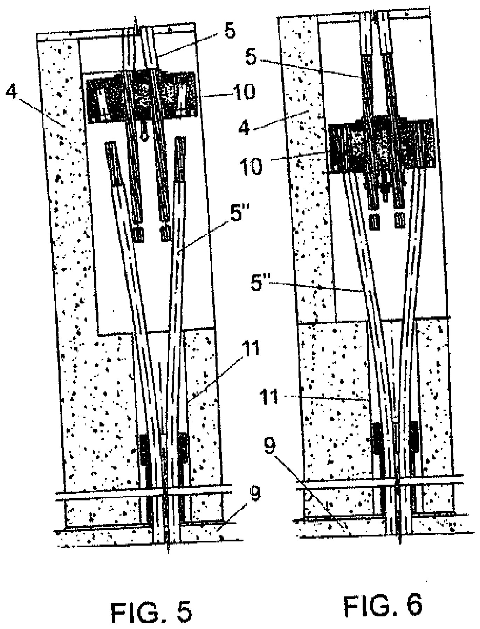

In accordance now with figures 5 and 6, when fixing the tower to the foundations or base shoe (9) it has been provided that respective vertical tendons emerge therefrom, which by means of connections (10) are fixed to tendons (5) of the arch stones which are going to form the first tower section, which incorporate longitudinal orifices (11) wherethrough these tendons are passed, tensioning them above the horizontal joint between the first and the second section, so that the tendons have a sufficiently large length so that the elongation, if tensioned, is sufficiently large so that the losses occurred in the fastening of the chocks when the jacks are removed, do not excessively decrease the elongation of the tensioning and, therefore, the tension of the tendon.

As regards the thickness of the arch stones (4) it has been provided that it is reduced, thus reducing the weight, which facilitates the assembly of the sections in the wind farm, especially in towers of great height.

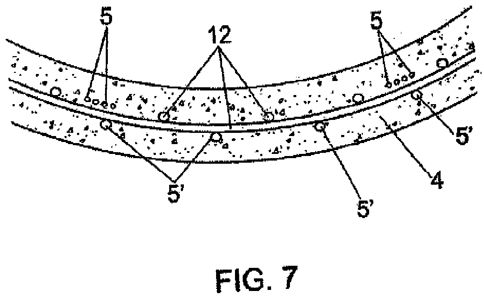

Therefore, and as observed in figure 7 , it has been provided that the rebar (12) is disposed in a single layer, instead of in the two conventional layers.

More specifically, the use of pre-tensioned frames has been provided as part of the active frame, so that in addition to the tendons (5) that run through the interior of the arch stones, adherent cords or tendons (5') are disposed that are factory-tensioned before placing the general rebar of the arch stone in the mould, before the concreting thereof.

These cords or tendons (5') as previously commented, collaborate with the general frame of the arch stone to withstand the operating stresses in service of the tower, additionally having two functions; on the one hand, withstanding the stresses of the arch stone in the handling operations thereof, demoulding, stockpiling, transport and pre-assembly, and, in parallel, serving as support and fixing of the rebar grilles on most of the arch stone surface, eliminating part of the separation elements of the rebar and maintaining the foreseen concrete coatings.

The aforementioned reduced thickness makes it necessary to displace the lifting and handling fastenings to the areas of the base and the head of the arch stone (4), corresponding to the prominent sectors of greater thickness (7). This extra thickness makes it possible to situate with clearance the fastenings, even decreasing their number from 4 to 2 units.

Finally, and again in accordance with figures 3 and 4, the prominent elements (7) wherein the active (8) and passive (8') fastenings of the tendons (5) are established, and specifically the surface where said fastenings are fixed, may constitute a surface of smooth revolution, which extends circumterentially, as shown in figure 4, or boxes or specific recesses can be established, which are radially distributed, as in the example of figure 3.

## Claims

1. Wind towers construction system, of the type formed from a series of vertical sections (2) of reinforced concrete, obtained by means of the joining of two or more arch stones (4), **characterized in that** the different sections (2) that participate in the tower have a truncated cone configuration of straight directrix, of different inclination for each section, so that an uneven profile is obtained as close as possible to the theoretical and optimum curved profile, provided for the tower.

2. Wind towers construction system, according to claim 1, wherein the arch stones (4) which participate in the sections (2) into which the tower is divided are vertically interlinked from cable tendons (5), which run vertically through the interior of the arch stones, they emerge at both ends in perfectly vertical position, and are made to pass through respective orifices (6) made in respective prominent elements (7) of the edges defined in the horizontal joint of the arch stones (4), so that a same tendon (5) of an arch stone is linked by one of its ends with the arch stone immediately above it, and by the other end with the arch stone immediately below it.

3. Wind towers construction system, according to claim 2, wherein the tendons (5) are clad with an anti-adherent coating.

4. Wind towers construction system, according to claims 1 to 3, wherein for the fixing of the tower to the base shoe, it has been provided that from the base shoe (9) emerge respective tendons (5"), which by means of connections (10) are fixed to the tendons (5) of the arch stones which are going to form the first section of tower, which incorporate longitudinal orifices (11) wherethrough these tendons are made to pass, being tensioned above the horizontal joint between the first and the second section of the tower.

5. Wind towers construction system, according to claim 1, wherein the arch stones have less thickness than is conventional, so that the rebar (12) is disposed in a single layer.

6. Wind towers construction system, according to claim 2 and 5, wherein the arch stones (4) include pre-tensioned frames as part of the active frame, so that in addition to the tendons (5) which run through the interior of the arch stones, the adherent cords or tendons (5') are disposed, which are factory-tensioned before placing the general rebar of the arch stone in the mould, before the concreting thereof.

7. Wind towers construction system, according to claim 5, wherein the areas of the base and the head of the arch stone corresponding to the prominent sectors (7) have an extra thickness, whereof the lifting and handling fastenings and the active (8) and passive (8') fastenings of the tendons (5) are established.

8. Wind towers construction system, according to claim 2, wherein the active (8) and passive (8') fastenings of the tendons (5) are disposed on a smooth surface of revolution which extends circumferentially.

9. Wind towers construction system, according to claim 2, wherein the active (8) and passive (8') fastenings of the tendons (5), are disposed in a series of boxes (14) or specific recesses, distributed radially.
